Europäisches Patentamt

European Patent Office

Office européen des brevets

(11) Publication number: **0 137 945**
**B1**

## EUROPEAN PATENT SPECIFICATION

(45) Date of publication of patent specification: **25.01.89**     (51) Int. Cl.⁴: **G 01 F 1/32**

(21) Application number: **84109373.5**

(22) Date of filing: **07.08.84**

(54) Vortex flow meter.

(30) Priority: **15.08.83 JP 148928/83**
**27.12.83 JP 204538/83 u**

(43) Date of publication of application:
**24.04.85 Bulletin 85/17**

(45) Publication of the grant of the patent:
**25.01.89 Bulletin 89/04**

(84) Designated Contracting States:
**CH DE FR GB LI NL**

(56) References cited:
**AU-B- 418 033**
**GB-A-2 108 669**
**US-A-4 134 296**
**US-A-4 380 934**

(73) Proprietor: **Oval Engineering Co., Ltd.**
**10-8 Kamiochiai 3-chome**
**Shinjuku-ku Tokyo (JP)**

(72) Inventor: **Misumi, Masao c/o Oval Engineering**
**Co., Ltd**
**10-8, Kamiochiai 3-chome**
**Shinjuku-ku Tokyo (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a vortex flow meter as set forth in the preamble of claim 1. Such vortex flow meter is known from a AU—B—418 033.

In the state of the art vortex flow meters are known comprising a vortex generator and a vortex detecting means which are unitarily constructed. Such construction renders maintenance and checking of the flow meter difficult. Hence, it has been proposed to construct those vortex flow meters with the different individual portions. As one example thereof, a vortex flow meter is disclosed in the aforementioned U—A—16080 in which a cylindrical body is installed downstream for a vortex generator and in parallel therewith within a flow path defining tube. Pressure variation receiving coals are formed in the cylindrical body defining a sensor tube so as to pass therethrough in a direction perpendicular to the axis of the cylindrical body and extending transversely to the direction of fluid flow. A detector for detecting the pressure difference variations of the flow of fluid reciprocating moving in the holes passing through the sensor tube are installed in said flow meter.

However, in this flow meter construction the entire length of the holes passing through the sensor tube do not exceed the diameter of the sensor tube. Furthermore, since the holes are short, a turbulent vortex contained in the flowing fluid is apt to be detected without being attenuated. Consequently, there arise some problems that a large amount of noise is mixed in the signal and thereby mistaken pulses are generated very often.

In US—A—4 134 296 a vortex detecting means unitarily constructed with the longest vortex generating means is disclosed in which a bypass fluid passage for guiding the vortex pressure variation into the measuring means from both of the conduit wall surface at a place near to the vortex generator is formed outside of the fluid conduit, and thereby the vortex signal can be obtained from the value of the varying flow rate of fluid flowing through the bypass fluid passage. However, there arises a problem that the sensitivity of the flow meter is lowered in case that the bypass fluid passage is long.

It is known that the number of common vortex occurrences is proportional to the velocity or quantity of fluid flowing. The quantity of flow can be measured by counting the number of Karman vortices. However, in the conventional manner, an ultrasonic wave is used to count the number of common vortices and the frequency modulation or the phase modulation is detected thereby. The accuracy of this method is effected by external noises or the like, thus resulting in errors of measurement. Since the ultrasonic wave scatters about, the power of the signal received is considerably diminished. Furthermore, the flow of the fluid is effected at a place near the vortex so that the ratio of S/N (signal/noise) is lowered due to the interference with the turbulence of the vortex. This may be another reason for inaccuracies in the measurement. Furthermore, the measurement of the fluid flow is badly effected by interference from the reflection of the wave at the wall surface of the tube conducting said fluid flow opposite the transmitted ultrasonic wave. Usually, in order to prevent such an effect, a sound absorbing material like woven carton or woollen cloth is placed on the inner wall surface of the tube so that the measuring of the fluids flow can be effectively done in a purified liquid only. It cannot be done effectively in the case of dirty or impure liquids that is mixed with dust, mist etc.

It is therefore the object of the present invention to provide a vortex flow meter which is not effected by external noises or the like and which is capable of counting precisely the number common vortices.

This object is attained by the characterizing features of claim 1. Preferred embodiments of the invention are subject-matter of the dependent claims.

By the present invention a vortex flow meter is provided in which the measurement of common vortices may be performed inside of a sensor tube which is not effected by external turbulence. The pressure differences caused by vortices is rectified and scattering of ultrasonic wave is eliminated. Furthermore, means may be provided which prevent from clogging the openings of the sensor tube by dust mixed into the fluid to be measured.

In a preferred embodiment of the invention the sensor tube may be sectioned by a closure element in the middle thereof and the pressure variations received by the openings in the tube section are guided into a bypass fluid passage outside the flow paths defining tube and the flow of fluid is detected in the bypass fluid passage by use of ultrasonic wave transmitting the receiving apparatuses. Hence, the measuring apparatus may easily be protected against heat of the fluid flowing in the flow path.

The vortex flow meter of the invention can be manufactured at lower cost, the maintenance or monitoring work can be simplified considerably.

The invention is now explained with reference to the accompanying drawings.

Fig. 1—The cross-sectional view for explaining the construction of a vortex flow meter main portion according to the present invention. In Fig. 1, Fig. 1(A) is a cross-sectional view taken on line A—A of Fig. 1(B), and Fig. 1(B) is a cross-sectional view taken on line B—B of Fig. 1(A).

Figs. 2(A) through (F) are cross-sectional views showing modifications of the hollow members that can be used in the present invention.

Fig. 3 is an enlarged cross-sectional view showing the construction of a vortex flow meter's main portion according to the present invention.

Fig. 4 is a cross-sectional view for explaining another embodiment of the vortex flow meter according to the present invention.

Fig. 5 is a cross-sectional view taken on line V—V of Fig. 4.

Fig. 6 and 7 are views showing the construction of other embodiments of the present invention.

Fig. 8 is a cross-sectional view showing the construction of another embodiment of the vortex flow meter taken along a plane running through the bluff body or Karman vortex generator and being perpendicular to the flow path.

Fig. 9 is a cross-sectional view taken on line IX—IX of Fig. 8.

Description of the preferred embodiments

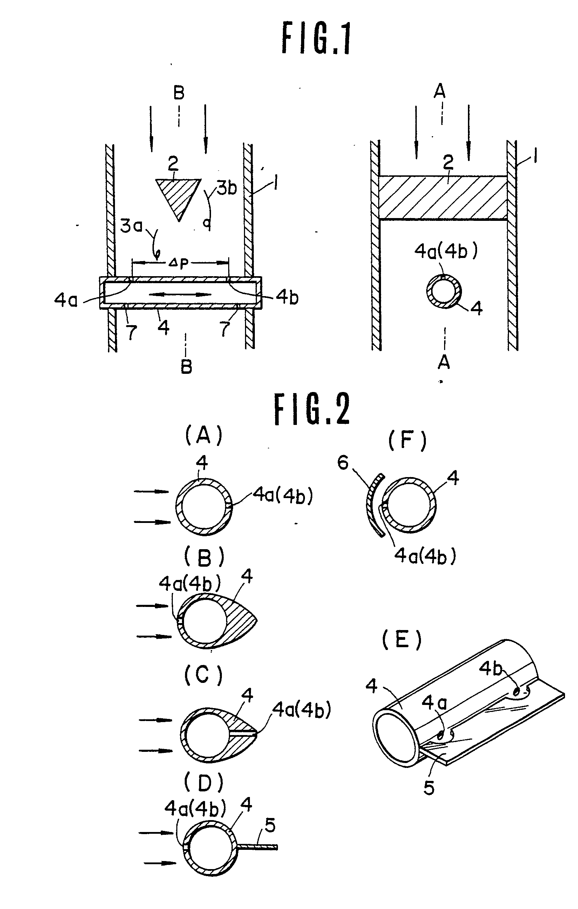

In Fig. 1, 1 is a flow path defining tube, 2 a well known bluff body or vortex generator; 3a and 3b. Karman vortices created by the bluff body 2; and 4 a sensor tube according to the present invention. The sensor tube 4 is positioned at the downstream side of the bluff body 2 in a direction intersecting perpendicularly the direction in which the bluff body 2 extends and has a pair of openings 4a and 4b, arranged at intervals of predetermined distances in the axial direction of sensor tube 4.

As is well known, the pressure at the side of opening 4a decreases when the Karman vortex 3a is generated, and the pressure at the side of opening 4b decreases also when the Karman vortex 3b is generated. The pressure variation affects the fluid in sensor tube 4 through openings 4a and 4b resulting in alternating pressure differences $\Delta P$ in sensor tube 4 as shown by an arrow.

Consequently, if the movement of the fluid, the pressure difference thereof, or the like is measured by use of optional desired means, for instance, an ultrasonic wave, a laser beam, a pressure-sensitive element, etc., then the number of Karman vortex occurrences can be measured thereby.

Figs. 2(A) through (F) are cross-sectional views showing modifications of the afore-mentioned sensor tube. Fig. 2(A) shows an example of arranging the openings 4a and 4b at the downstream side of the sensor tube 4. Fig. 2(B) shows another example of forming the downstream side of the sensor tube 4 in a streamline body for preventing it from generating a Karman vortex. Karman vortices generated by the sensor tube 4 might probably affect the fluid in it through said openings 4a and 4b which are provided in its wall. Fig. 2(C) shows another example of arranging the openings 4a and 4b in a streamline body at the downstream side of the sensor tube 4. Fig. 2(D) shows another example of installing a partition plate 5 parallel with the sensor tube 4 at the downstream side of the cylinder-shaped sensor tube 4 for preventing it from generating a Karman vortex. Fig. 2(E) shows another example of arranging the openings 4a and 4b at the downstream side of the sensor tube 4 at which a partition plate 5 is installed. Fig. 2(F) shows another example of installing a dust-proof plate 6 at the upstream side of the sensor tube 4, preventing the openings 4a and 4b from being clogged by dust or the like which may otherwise enter therein. The dust-proof plate 6 is to be installed only at the upstream side of the sensor tube 4.

Moreover, the vortex flow meter according to the present invention is applicable to either liquid or gas. In the case of measuring the flow of gas, especially high temperature vapor, etc., as shown in Fig. 1(A), it may be preferable to provide a drainage hole 7 in sensor tube 4 to drain the water that possibly may condense and accumulate. The example of arranging a pair of openings 4a and 4b in the sensor tube 4 is explained heretofore. However, it may be easily understood that the openings are not limited to a single pair only.

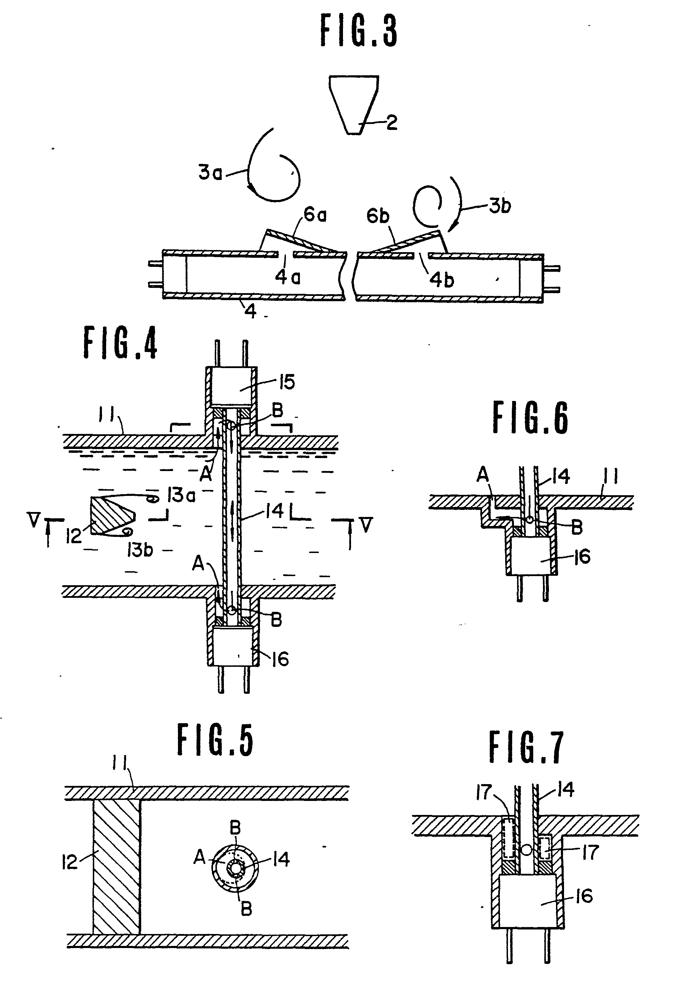

Fig. 3 is an enlarged cross-sectional view showing the main portion of another embodiment according to the present invention. In the embodiment shown in Fig. 3, dust-proof plates 6a and 6b covering openings 4a and 4b of sensor tube 4 are unitarily provided. In such a manner, dirt, dust, etc. do not enter into sensor tube 4 through openings 4a and 4b when they are directed to either the upstream side or the downstream side of it. On that occasion, the opening portion of the dust-proof plates 6a and 6b is situated at the vortex side as shown in Fig. 3 so as to effectively guide the pressure variation due to the vortex into sensor tube 4.

As is apparent from the foregoing description, according to the present invention, the measurement of the fluid flow can be performed precisely since the number of Karman vortices occurring in the sensor tube are not affected by external turbulence.

Fig. 4 is a cross-sectional view for explaining the main portion of another embodiment of the vortex flow meter according to the present invention. Fig. 5 is a cross-sectional view taken on line V—V of Fig. 4. In Figs. 4 and 5, 11 is a flow path defining tube in which the fluid to be measured flows; 12 is a well known vortex generator or bluff body; 13a and 13b are Karman vortices created by the bluff body 12; and 14 is a sensor tube. Sensor tube 14 is a hollow member installed at the downstream side of the bluff body 12 and intersecting with axial direction thereof. In this embodiment of the present invention, the sensor tube 14 at both ends is installed in a respective space and passing through a through bore A provided in the wall of the fluid conduction tube 11, and an opening B is provided in the sensor tube 14 at its sections external of the flow path defining tube 11 and situated in said spaces.

Consequently, according to this embodiment of the present invention, the pressure variation of the fluid to be measured due to the Karman vortex created by the bluff body 12 is guided into the sensor tube 14 through through bore A and opening B, and then the pressure variation in the sensor tube 14 or the fluid flow variation due to the pressure variation is detected by sensing apparatuses for instance, an ultrasonic wave transmitter 15 and an ultrasonic wave receiver 16. By such means, the measurement of the velocity or quantity of the fluid is performed.

According to this embodiment, the measurement of the fluid flow is hardly affected by the noise generated in the flow path defining tube 11. Furthermore since the fluid flow due to the fluid pressure variation caused by Karman vortices is rectified, the quality of the detected wave form is largely improved. Also the opening B receiving fluid pressure variation caused by Karman vortices can be enlarged without the measurement of the fluid flow being affected by dust or the like in the flow path defining tube 11. As a result, the pressure variation due to Karman vortices can be effectively detected. Since the pressure receiving opening B can be provided perpendicularly to the flow of fluid flowing in tube 11 as shown in Fig. 5, the measuring may be effectively performed in the presence of water (or moisture), dirt, dust, or the like. Moreover, through bore A is perpendicular to opening B so that the measuring may be effectively performed without being affected by external ultrasonic waves. The above features represent the merits of the flow meter according to the present invention.

Fig. 6 is a cross-sectional view showing the main portion of the other embodiment of the present invention. In the embodiment, the through bore A and the opening B of the sensor tube 14 are somewhat spaced from each other. It may be easily understood that the embodiment shown in Fig. 6 may perform its functions as well as that shown in Figs. 4 and 5.

Fig. 7 is a cross-sectional view showing the main portion of still another embodiment of the present invention. In this embodiment, an ultrasonic sound absorbing material 17 is mounted on the surface of the sensor tube portion situated in the space at a place near the opening B. It results therefrom that the measurement of the signal to be detected will not be greatly affected by external turbulence which is caused by an ultrasonic wave which may otherwise possibly enter the sensor tube 14.

Furthermore, in each of the afore-mentioned embodiments, a filter can be installed in the place near the through bore A. The filter is comprised of a porous material, for example porous metal. In the case of installing a filter therein, it may be possible thereby to prevent dust from entering into the sensor tube.

As is apparent from the foregoing description, the vortex flow meter which is not affected by external turbulence can be provided according to the afore-mentioned embodiments of the present invention. Furthermore, in the vortex flow meter, the fluid pressure receiving opening will probably not be clogged by dust mixed into the fluid to be measured.

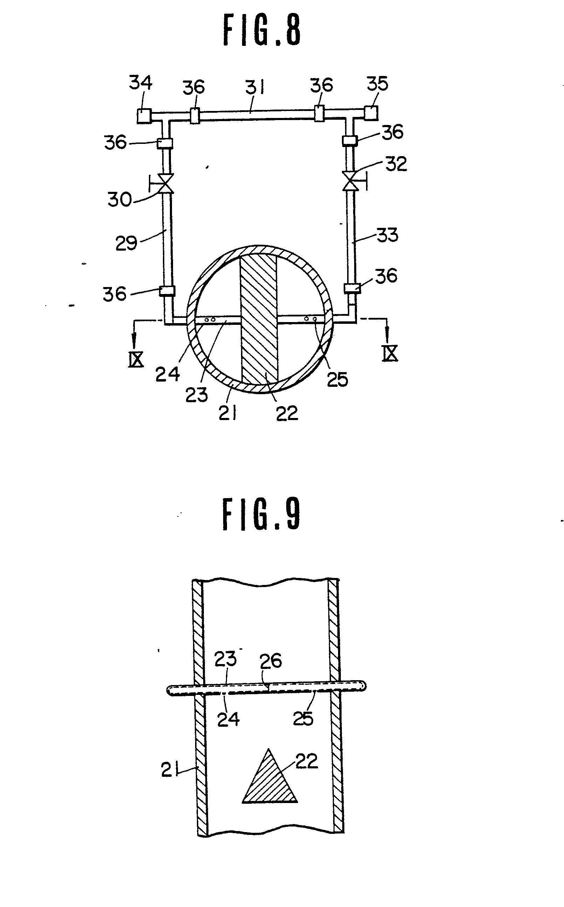

Figs. 8 and 9 are cross-sectional views for explaining another embodiment of the present invention. Fig. 8 is a cross-sectional view including the bluff body or vortex generator 22 of the vortex flow meter according to the present invention and being shown on a plane that is perpendicular to the cross-section of a flow path defining tube 21. Fig. 9 is a cross-sectional view shown on line IX—IX of a sensor tube 23 shown in Fig. 8. The line IX—IX intersects with the axial direction of the vortex generator 22 at the downstream side thereof and runs through the wall of the flow path defining tube 21.

Each of pressure receiving openings 24 and 25 is bored in the sensor tube 23 at a place near the wall surface of the flow path defining tube 21. A partition wall 26 installed at the central portion of the sensor tube 23 prevents the movement of the fluid between the openings 24 and 25. The partition wall 26 does not have to be perfectly air-tight. It is sufficient that the fluid flow, due to pressure variation, be stably displaced in a bypass passage to be mentioned hereinafter.

The partition wall 26 does not always need to be completely at the central position of the flow path defining tube 21. The bypass passage comprises tubes 29, 31 and 33. The bypass tube 31 forms a straight flowing passage defining a detection section of the bypass passage. An ultrasonic wave transmitter 34 and an ultrasonic wave receiver 35 are installed, respectively, at both end portions of the straight bypass flowing passage defined by tube 31. An ultrasonic wave emitted from the ultrasonic wave transmitter 34 driven by an ultrasonic wave oscillator not shown in the figure is received by the ultrasonic wave receiver 35. The modulation of the ultrasonic wave due to fluid displacement between both ends of the straight flowing passage defined by tube 31 is applied to a detecting circuit and an amplifying circuit not shown in the figure. The amplifying circuit generates a vortex signal. Valves 30 and 32 are employed for adjusting or intercepting the fluid displacement in the straight flowing passage defined by tube 31. Those valves are used mainly for the purpose of adjusting the bypass fluid flow so as to optimize the vortex signal and for intercepting the fluid flow at the time of checking the ultrasonic wave transmitter and receiver. The reference numeral 36 represents the joint or coupling for connecting the tubes 29, 31 and 33 with each other and with the sensor tube 23.

According to the afore-mentioned embodiment, even in the case of a fluid with a high temperature, the temperature is lowered at a place near the straight-flowing passage defined by tube 31. Since the fluid temperature decreases in accordance with the length of the bypass passage, a low-priced material like PTZ, etc. can be used as a material for the ultrasonic wave transmitter and receiver instead of a high-priced material such as niobic acid lithium having a characteristic of a high Curie point. Furthermore, it may be possible to adjust the vortex signal so as to detect the optimized signal by opening and closing the valves. Moreover, at the time of checking the vortex flow meter, the ultrasonic wave transmitter and receiver can be easily replaced by shutting off the valves without removing the vortex flow meter from the flow path defining tubes.

## Claims

1. A vortex flow meter for measuring the velocity of a fluid flowing in a flow path defined by a tube (1, 11, 21) comprising an elongate vortex generator (2, 12, 22) extending in said flow path transversely to the flow direction of said fluid and an elongate sensor generally cylindrical structure (4, 14, 23) disposed in said flow path downstream of said vortex generator (2, 12, 22) and also extending transversely to the flow direction of said fluid, said sensor structure (4, 14, 23) being provided with at least a pair of openings (4a, 4b, B24, 25) in the side wall thereof which are spaced from each other in a direction transversely to the flow direction of said fluid and being connected to a measuring means for measuring the difference of the fluid pressures present at said openings (4a, 4b, B24, 25), characterized in that the sensor structure (4, 14, 23) is a tube and is arranged in said flow path transversely to the axial direction of said vortex generator (2, 12, 22), and that the openings (4a, 4b, B24, 25) of the or each pair are formed in said sensor tube (4, 14, 23) each at a respective location near the wall surfaces of the flow path defining tube (1, 11, 21).

2. A vortex flow meter as defined in claim 1, characterized in that said openings (4a, 4b, 24, 25) are arranged on the surface of the upstream side of the sensor tube (4, 23).

3. A vortex flow meter as defined in claim 1 characterized in that the openings (4a, 4b) are arranged on the surface at the downstream side of the sensor tube (4).

4. A vortex flow meter as defined in claim 1 characterized in that the cross section of the sensor tube (4) is in a shape of the dimension gradually decreasing toward the downstream side thereof.

5. A vortex flow meter as defined in any one of claims 1 to 3 characterized in that a partition plate (5) is attached parallel to the sensor tube (4) at the downstream side thereof.

6. A vortex flow meter as defined in claim 2 characterized in that a dust-proof plate (6, 6a, 6b) for protecting the openings (4a, 4b) from dust entering therein is provided at the upstream side of the sensor tube (4).

7. A vortex flow meter as defined in claim 6 characterized in that said dust proof plate (6a, 6b) is formed integrally with the sensor tube.

8. A vortex flow meter as defined in any one of the preceding claims characterized in that the sensor tube (4) has at least one drainage hole (7).

9. A vortex flow meter as set forth in claim 1 characterized in that said sensor tube (14) extends through the wall of the flow path defining tube (11), each end of said sensor tube (14) ending in a space external of said flow path defining tube (11), said spaces being connected to the flow path by through bores A extending through the wall of the flow path defining tube, the openings (B) of the sensor tube (14) being situated in the portions thereof situated in said spaces.

10. A vortex flow meter as defined in claim 9 characterized in that a sound absorbing material (17) is placed in said space housing the sensor tube (14).

ends at a place near the openings (B) of said sensor tube (14).

11. A vortex flow meter as defined in claim 9, characterized in that a porous material (17) is removably mounted at a place near each of the openings (B) of the sensor tube (14).

12. A vortex flow meter as defined in any one of the preceding claims characterized in that the pressure difference variation in said sensor tube (4, 14, 23) is detected as a modulation of an ultrasonic wave which is transmitted between both ends of the sensor tube (4, 14, 23).

13. A vortex flow meter as defined in any one of the preceding claims characterized in that said sensor tube (23) is sectioned by a closure member (26) in the middle thereof and that a bypass fluid passage (29, 31, 33) is provided connected to the sensor tube sections and the variation of the fluid pressure in said bypass fluid passage (29, 31, 33) is detected in a detection section (31) of said bypass fluid passage (29, 31, 33).

14. A vortex flow meter as defined in claim 13 characterized in that said bypass detection section (31) is connected to said sensor tube sections by valves (30, 32) and another bypass passage tubes (29, 33).

## Patentansprüche

1. Wirbelströmungsmesser zum Messen der Geschwindigkeit eines Fluides, das in einem Strömungsweg fließt, der von einem Rohr (1, 11, 21) gebildet wird, bestehend aus einem länglichen Wirbelerzeuger (2, 12, 22), der sich in dem Strömungsweg quer zur Strömungsrichtung des Fluides erstreckt, und einem länglichen Sensor (4, 14, 23) von im wesentlichen zylindrischem Aufbau, der in dem Strömungsweg stromabwärts vom Wirbelerzeuger (2, 12, 22) angeordnet ist und sich ebenfalls quer zur Strömungsrichtung des Fluides erstreckt, welcher Sensoraufbau (4, 14, 23) mit wenigstens einem Paar Öffnungen (4a, 4b, B, 24, 25) in der Seitenwand desselben versehen ist, die voneinander in einer Richtung quer zur Strömungsrichtung des Fluides Abstand haben und mit einer Meßeinrichtung zur Messung der Differenz der Fluiddrücke an den genannten Öffnungen (4a, 4b, B, 24, 25) verbunden sind, dadurch gekennzeichnet, daß der Sensoraufbau (4, 14, 23) ein Rohr ist und in dem Strömungsweg quer zur Axialrichtung des Wirbelerzeugers (2, 12, 22) angeordnet ist, und daß die Öffnungen (4a, 4b, B, 24, 25) des oder jedes Paares in dem Sensorrohr (4, 14, 23) jeweils an einer entsprechenden Stelle nahe den Wandflächen des den Strömungsweg bildenden Rohres (1, 11, 21) angeordnet sind.

2. Wirbelströmungsmesser nach Anspruch 1, dadurch gekennzeichnet, daß die genannten Öffnungen (4a, 4b, 24, 25) auf der stromaufwärtigen Seite des Sensorrohres (4, 23) angeordnet sind.

3. Wirbelströmungsmesser nach Anspruch 1, dadurch gekennzeichnet, daß die Öffnungen (4a, 4b) auf der stromabwärtigen Seite des Sensorrohres (4) angeordnet sind.

4. Wirbelströmungsmesser nach Anspruch 1, dadurch gekennzeichnet, daß der Querschnitt des Sensorrohres (4) von einer Gestalt ist, deren Abmessung allmählich gegen die stromabwärtige Seite desselben abnimmt.

5. Wirbelströmungsmesser nach einem der Ansprüche 1 bis 3, dadurch gekennzeichnet, daß eine Trennplatte (5) parallel zum Sensorrohr (4) an der stromabwärtigen Seite desselben befestigt ist.

6. Wirbelströmungsmesser nach Anspruch 2, dadurch gekennzeichnet, daß eine Staubschutzplatte (6, 6a, 6b) zum Schützen der Öffnungen (4a, 4b) gegen darin eintretenden Staub auf der stromaufwärtigen Seite des Sensorrohres (4) vorgesehen ist.

7. Wirbelströmungsmesser nach Anspruch 6, dadurch gekennzeichnet, daß die Staubschutzplatte (6a, 6b) integral mit dem Sensorrohr ausgebildet ist.

8. Wirbelströmungsmesser nach einem der vorhergehenden Ansprüche, dadurch gekennzeichnet, daß das Sensorrohr (4) wenigstens ein Ablaßloch (7) aufweist.

9. Wirbelströmungsmesser nach Anspruch 1, dadurch gekennzeichnet, daß das Sensorrohr (14) sich durch die Wand des den Strömungsweg ausbildenden Rohres (11) erstreckt, wobei jedes Ende des Sensorrohres (14) in einem Raum außerhalb des den Strömungsweg ausbildenden Rohres (11) endet, welche Räume mit dem Strömungsweg durch Durchgangsbohrungen (A) verbunden sind, die sich durch die Wand des den Strömungsweg ausbildenden Rohres erstrecken, wobei die Öffnungen (B) des Sensorrohres (14) in den Abschnitten desselben gelegen sind, die in den genannten Räumen liegen.

10. Wirbelströmungsmesser nach Anspruch 9, dadurch gekennzeichnet, daß ein Schallabsorptionsmaterial (17) in dem Raum angeordnet ist, der die Sensorrohrenden aufnimmt, an einer Stelle nahe der Öffnungen (B) des Sensorrohres (14).

11. Wirbelströmungsmesser nach Anspruch 9, dadurch gekennzeichnet, daß ein poröses 'Material (17) lösbar an einer Stelle nahe einer jeden der Öffnungen (B) des Sensorrohres (14) angebracht ist.

12. Wirbelströmungsmesser nach einem der vorhergehenden Ansprüche, dadurch gekennzeichnet, daß die Druckdifferenzschwankung in dem Sensorrohr (4, 14, 23) als eine Modulation einer Ultraschallwelle detektiert wird, die zwischen beiden Enden des Sensorrohres (4, 14, 23) übertragen wird.

13. Wirbelströmungsmesser nach einem der vorhergehenden Ansprüche, dadurch gekennzeichnet, daß das Sensorrohr (23) durch ein Verschlußelement (26) in der Mitte desselben unterteilt ist, und daß eine Bypass-Fluidleitung (29, 31, 33) vorgesehen ist, die mit den Sensorrohrabschnitten verbunden ist, und daß die Schwankung des Fluiddrucks in der Bypass-Fluidleitung (29, 31, 33) in einem Fühlerabschnitt (31) der Bypass-Fluidleitung (29, 31, 33) detektiert wird.

14. Wirbelströmungsmesser nach Anspruch 13, dadurch gekennzeichnet, daß der Bypass-Fühlerabschnitt (31) mit den Sensorrohrabschnitten durch Ventile (30, 31) und weitere Bypass-Strömungsröhren (29, 33) verbunden ist.

**Revendications**

1. Un débitmètre à vortex pour mesurer la vitesse d'écoulement d'un fluide dans un trajet d'écoulement défini par un tube (1, 11, 21), comprenant un générateur de vortex allongé (2, 12, 22) s'étendant dans ledit trajet d'écoulement transversalement à la direction d'écoulement du fluide, une structure de détecteur de profil allongé et généralement cylindrique (4, 14, 23) disposée dans ledit trajet d'écoulement en aval dudit générateur de vortex (2, 12, 22) et s'étendant également transversalement à la direction d'écoulement dudit fluide, ladite structure de détecteur (4, 14, 23) étant pourvue dans sa paroi latérale d'au moins une paire d'ouvertures (4a, 4b, B24, 25) qui sont espacées l'une de l'autre dans une direction transversale à la direction d'écoulement dudit fluide et qui sont reliées à un moyen de mesure servant à mesurer la différence entre les pressions de fluide existant dans lesdites ouvertures (4a, 4b, B24, 25), caractérisé en ce que la structure de détecteur (4, 14, 23) est un tube disposé dans ledit trajet d'écoulement transversalement à la direction axiale dudit générateur de vortex (2, 12, 22) et en ce que les ouvertures (4a, 4b, B24, 25) de la ou de chaque paire sont formées dans ledit tube détecteur (4, 14, 23) chacune en un endroit respectif proche des surfaces de parois du tube de définition de trajet d'écoulement (1, 11, 21).

2. Un débitmètre à vortex tel que défini dans la revendication 1, caractérisé en ce que lesdites ouvertures (4a, 4b, B24, 25) sont disposées sur la surface du côté d'amont du tube détecteur (4, 23).

3. Un débitmètre à vortex tel que défini à la revendication 1, caractérisé en ce que les ouvertures (4a, 4b) sont disposées sur la surface du côté d'aval du tube détecteur (4).

4. Un débitmètre à vortex tel que défini à la revendication 1, caractérisé en ce que la section droite du tube détecteur (4a) a un profil ayant une dimension qui diminue graduellement en direction de son côté d'aval.

5. Un débitmètre à vortex tel que défini dans l'une quelconque des revendications 1 à 3, caractérisé en ce qu'une plaque séparatrice 5 est fixée parallèlement au tube détecteur (4) sur son côté d'aval.

6. Un débitmètre à vortex tel que défini dans la revendication 2, caractérisé en ce qu'une plaque antipoussière (6, 6a, 6b) servant à protéger les ouvertures (4a, 4b) contre une pénétration de poussière est disposée sur le côté d'amont du tube détecteur (4).

7. Un débitmètre à vortex tel que défini à la revendication 6, caractérisé en ce que ladite plaque anti-poussière (6a, 6b) est formée unitairement avec le tube détecteur.

8. Un débitmètre à vortex tel que défini dans l'une quelconque des revendications précédentes, caractérisé en ce que le tube détecteur (4) porte au moins un trou de drainage (7).

9. Un débitmètre à vortex tel que défini dans la revendication 1, caractérisé en ce que ledit tube détecteur (14) s'étend au travers de la paroi du tube (11) de définition de trajet d'écoulement, chaque extrémité dudit tube détecteur (14) se terminant dans un espace extérieur audit tube (11) de définition de trajet d'écoulement, lesdits espacés étant reliés au trajet d'écoulement par des trous de traversée (A) s'étendant au travers de la paroi du tube·de définition de trajet d'écoulement, les ouvertures (B) du tube détecteur (14) étant situées dans les parties qui sont placées dans lesdits espaces.

10. Un débitmètre à vortex tel que défini à la revendication 9, caractérisé en ce qu'une matière d'absorption de son (17) est placée dans ledit espace contenant les extrémités des tubes détecteurs en un endroit proche des ouvertures (B) dudit tube détecteur (14).

11. Un débitmètre à vortex tel que défini à la revendication 9, caractérisé en ce qu'une matière poreuse (17) est disposée de façon amovible en un endroit proche de chacune des ouvertures (B) du tube détecteur (14).

12. Un débitmètre à vortex tel que défini dans l'une quelconque des revendications précédentes, caractérisé en ce que la variation de différence de pression dans ledit tube détecteur (4, 14, 23) est détectée comme une modulation d'une onde ultra-sonique qui est transmise entre les deux extrémités du tube détecteur (4, 14, 23).

13. Un débitmètre à vortex tel que défini dans l'une quelconque des revendications précédentes, caractérisé en ce que ledit tube détecteur (23) est divisé en son milieu par un élément d'obturation (26) et en ce qu'il est prévu un passage de dérivation de fluide (29, 31, 33) qui est relié aux parties du tube détecteur et la variation de la pression de fluide dans ledit passage de dérivation de fluide (29, 31, 33) est détectée dans une section de détection (31) dudit passage de dérivation de fluide (29, 31, 33).

14. Un débitmètre à vortex tel que défini dans la revendication 13, caractérisé en ce que ladite partie de détection (31) du passage de dérivation est relié auxdites parties du tube de détection par des valves (30, 32) et d'autres tubes de passage de dérivation (29, 33).

# FIG.1

# FIG.2

(A)

(F)

(B)

(C)

(E)

(D)

# FIG.3

# FIG.4

# FIG.6

# FIG.5

# FIG.7

# FIG.8

# FIG.9